# EUROPÄISCHE PATENTSCHRIFT

(11) **EP 2 836 635 B1**
(45) Veröffentlichungstag und Bekanntmachung des Hinweises auf die Patenterteilung: **08.06.2016**
(21) Anmeldenummer: 13714285.7
(22) Anmeldetag: 04.04.2013
(51) Int. Cl.: D06F 37/42, D06F 37/36, D06F 37/30

(54) **MOTORANSTEUERSCHALTUNG FÜR EINEN BÜRSTENLOSEN WASCHMASCHINENMOTOR**
MOTOR CONTROL CIRCUIT FOR A BRUSHLESS WASHING MACHINE MOTOR
CIRCUIT D'EXCITATION DE MOTEUR SANS BALAIS POUR MACHINE À LAVER

(30) Priorität: 10.04.2012 DE 102012205816
(43) Veröffentlichungstag der Anmeldung: 18.02.2015
(73) Patentinhaber: BSH Hausgeräte GmbH, 81739 München (DE)
(72) Erfinder: ALBAYRAK, Hasan Gökcer, 13469 Berlin (DE); DZIVY, Miroslav, 08001 Presov (SK); SEIDL, Rudolf, 93057 Regensburg (DE); SKRIPPEK, Jörg, 14641 Wustermark (DE)
(86) Internationale Anmeldenummer: PCT/EP2013/057066
(87) Internationale Veröffentlichungsnummer: WO 2013/152978

(56) Entgegenhaltungen:
- DE-A1-102006 060 208
- DE-A1-102007 009 604
- DE-A1-102010 039 667

## Beschreibung

Die Erfindung betrifft eine Motoransteuerschaltung für einen bürstenlosen Waschmaschinenmotor, mit einer Inverterstufe zur Leistungsansteuerung eines bürstenlosen Motors, einer Steuerstufe zur Erzeugung von Steuersignalen für die Inverterstufe, wobei die Inverterstufe von der Steuerstufe über Steuerleitungen angesteuert wird. Die Erfindung betrifft außerdem eine Waschmaschine mit einer derartigen Motoransteuerschaltung.

Bei einer solchen Motoransteuerschaltung wird von der Inverterstufe aus einer Gleichspannung eines sog. Zwischenkreises durch abwechselndes Durchschalten des positiven oder negativen Potentials der Gleichspannung auf wenigstens zwei Ausgangsklemmen mittels elektronischer Schalter eine Wechselspannung erzeugt, mit der ein bürstenloser Motor betrieben werden kann. Die Ansteuersignale für die elektronischer Schalter werden von der Steuerstufe erzeugt. Ein Beispiel für eine derartige Motoransteuerschaltung ist in der WO 2010/100030 A1 gezeigt.

Die Inverterstufe und die Steuerstufe werden gemeinsam aus dem Zwischenkreis versorgt. Wenn die Motoransteuerschaltung einen Trommelantrieb ansteuern soll" also einen Motor, der direkt oder über Riemen eine Trommel in Drehung versetzen kann, muss aus Sicherheitsgründen für einen Anlaufschutz gesorgt werden, d.h. es muß verhindert werden, daß der Trommelantrieb anläuft, solange die Tür geöffnet ist. Dies ist bisher dadurch gewährleistet, daß die Stromversorgung für die Motoransteuerschaltung durch einen Türkontaktschalter unterbrochen wird. Ein Beispiel für eine solche Ansteuerschaltung zeigt die DE 10 2007 009 604 A1. Darüber hinaus zeigt die DE 10 2008 016 629 A1 eine Schaltung mittels welcher der Schaltzustande eines Türkontaktschalters erfaßt und in Abhängigkeit von dem Schaltzustand verschiedene Verbraucher an die die Versorgungsspannung zu- oder von dieser abgeschaltet werden.

Diejenigen Schaltkreise, welche in einer Motoransteuerschaltung die Steuerstufe beherbergen, übernehmen jedoch immer häufiger auch noch andere Steuerungsaufgaben. Beispielsweise kann es erforderlich sein, über eine weitere Inverterstufe eine Laugenpumpe bei geöffneter Tür anzusteuern, um Restwasser aus dem Laugenbehälter abzupumpen. Dies bedeutet jedoch, daß die Steuerstufe nicht mehr einfach mit dem Türkontaktschalter von der Stromversorgung aus dem Zwischenkreis getrennt werden darf.

Die Aufgabe der vorliegenden Erfindung besteht darin, eine Motoransteuerschaltung der eingangs genannten Art zu schaffen, die einen sicheren Anlaufschutz bietet.

Dies wird erreicht durch eine Motoransteuerschaltung für einen bürstenlosen Waschmaschinenmotor, mit einer Inverterstufe zur Leistungsansteuerung eines bürstenlosen Motors, und mit einer Steuerstufe zur Erzeugung von Steuersignalen für die Inverterstufe, wobei die Inverterstufe von der Steuerstufe über Steuerleitungen angesteuert wird und wobei eine Schutzschaltung zum Abschalten der Steuerleitungen vorgesehen ist.

Mit der Abschaltung der Steuerleitungen wird zuverlässig verhindert, daß die Inverterstufe den Motor ansteuern kann, solange die Steuerstufe mit Spannung versorgt ist.

Gemäß einer vorteilhaften Ausführungsform der Erfindung umfasst die Inverterstufe eine Brückenschaltung, welche High-Side-Schalter und Low-Side-Schalter aufweist. Die Brückenschaltung dient in vorteilhafter Weise dazu, aus der Gleichspannung des DC-Zwischenkreises für jeden Strang des bürstenlosen Motors eine phasenverschobene Wechselspannung bereitzustellen. Dabei ist in jedem Zweig der Brückenschaltung jeweils ein elektronischer High-Side-Schalter vorgesehen, der einen Strang des Motors mit dem High-Side-Potential der Zwischenkreisspannung verbindet, und mit einem Low-Side-Schalter, der den Strang des Motors mit dem Low-Side-Potential der Zwischenkreisspannung verbindet. Dabei wird als Low-Side-Potential der Zwischenkreisspannung dasjenige Potential bezeichnet, welches das Massepotential der Motoransteuerschaltung bildet oder welches spannungsmäßig jedenfalls näher am Massepotential liegt als das High-Side-Potential.

In einer vorteilhaften Weiterbildung der Erfindung sind für den High-Side-Schalter und für den Low-Side-Schalter eines jeden Zweiges jeweils getrennte Steuerleitungen vorgesehen. Auf diese Weise ist es möglich, nur einen Teil der Steuerleitungen abzuschalten, beispielsweise nur die Steuerleitung für die High-Side-Schalter oder nur die Steuerleitungen für die Low-Side-Schalter. Über die nicht-abgeschalteten Steuerleitungen ist dann auch bei aktivierter Schutzschaltung immer noch ein Kurzschlussbremsen des Motors möglich. Dies ist vorteilhaft, da auf diese Weise verhindert werden kann, daß der Motor über die Freilaufdioden in den Schalttransistoren der Brückenschaltung eine Induktionsspannung in den Zwischenkreis zurückspeist, wenn im Schleuderbetrieb keine Ansteuerung der Schalter erfolgt. Eine solche Induktionsspannung könnte zu einem Schaden an der Ansteuerschaltung führen. Dennoch ist, auch wenn nur die Steuerleitungen für die High- oder Low-Side-Schalter abgeschaltet werden, der Anlaufschutz gewährleistet, da allein mit dem Durchschalten eines Potentials der Zwischenkreisspannung im Motor kein Drehfeld erzeugt werden kann und somit ein Anlaufen des Motors nicht möglich ist.

Besonders vorteilhaft ist es, wenn die Schutzschaltung die Steuerleitungen für die High-Side-Schalter abschaltet. Dann sind insbesondere beim Kurzschlussbremsen die Stränge des Motors auf das niedrigere Potential der Zwischenkreisspannung geschaltet.

Gemäß einer weiteren vorteilhaften Weiterbildung der Erfindung weist die Schutzschaltung einen Steuereingang für ein Türkontaktsignal auf. Der Steuereingang der Schutzschaltung kann somit direkt mit einem üblichen Türkontaktschalter verbunden werden. Insbesondere kann vorgesehen sein, daß keine weitere Logik oder Potentialanpassung zwischen Türkontaktschalter und Eingang der Schutzschaltung erforderlich ist. Damit kann die erfindungsgemäße Motoransteuerschaltung besonders einfach in bestehende Waschgerätedesigns integriert werden oder sogar in bereits bestehende Geräte im Austausch nachgerüstet werden. Insbesondere kann vorgesehen sein, daß der Steuereingang mit Netzwechselspannung beaufschlagt werden kann.

Vorteilhafterweise weist die Schutzschaltung wenigstens einen Steuerausgang, zur Abschaltung der Steuerleitungen, mit Optokoppler auf. Auf diese Weise kann eine galvanische Trennung zwischen der Schutzschaltung und den Steuerleitungen erreicht werden, insbesondere wenn am Steuereingang der Schutzschaltung über einen Türkontaktschalter Netzspannung angelegt ist.

Die Erfindung schafft weiterhin eine Waschmaschine mit einer Motoransteuerung nach einem der Ansprüche 1 bis 7. Eine solche Waschmaschine bietet einen zuverlässigen Trommelanlaufschutz mit dem Vorteil, daß in der Steuerstufe zusätzliche Funktionen implementiert sein können.

Weitere Vorteile und Merkmale der Erfindung ergeben sich aus der nachfolgenden Beschreibung unter Bezugnahme auf die beigefügten Zeichnungen. In den Zeichnungen zeigt:
- Fig. 1: ein schematisches Blockschaltbild einer Motoransteuerschaltung gemäß einer ersten Ausführungsform der Erfindung,
- Fig. 2: ein detailliertes Blockschaltbild gemäß einer Weiterbildung der Erfindung.

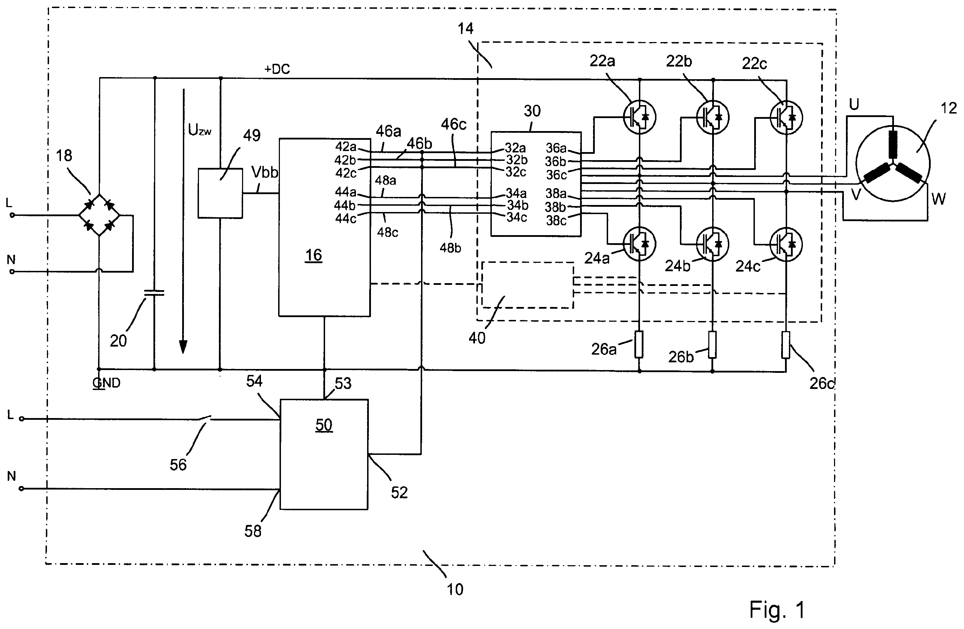

In dem Blockschaltbild in Fig. 1 ist schematisch eine Motoransteuerschaltung 10 für einen bürstenlosen Gleichstrommotor 12 dargestellt. Die Motoransteuerschaltung 10 weist eine Inverterstufe 14 zur Leistungsansteuerung des bürstenlosen Motors 12 mit drei Strängen U, V, W und eine Steuerstufe 16 zur Erzeugung von Steuersignalen für die Inverterstufe 14 auf. Die Motoransteuerschaltung 10 weist einen Zwischenkreis mit einem Low-Side-Potential und einem High-Side-Potential auf, zwischen denen eine Gleichspannung, die Zwischenkreisspannung U_{zw} anliegt. Dabei bildet das Low-Side-Potential das Massepotential GND der Motoransteuerschaltung, wobei in dem dargestellten Ausführungsbeispiel das High-Side-Potential in Bezug auf Low-Side-Potential ein positives Gleichspannungspotential +DC führt. Die Zwischenkreisspannung U_{zw} wird durch ein Netzteil, mit einem Gleichrichter 18 und einem Kondensator 20, aus einer Netzwechselspannung gewonnen, welch an den Klemmen L, N anliegt.

Die Zwischenkreisspannung U_{zw} kann einige 100 Volt, typischerweise 300 bis 400 Volt, betragen, um ausreichend Leistung für die Ansteuerung des BLCD-Motors 12 bereitzustellen.

Die Inverterstufe 14 weist eine Brückenschaltung mit drei High-Side-Schaltern 22a, 22b, 22c und drei Low-Side-Schaltern 24a, 24b, 24c auf. Die High-Side-Schalter 22a, 22b, 22c und die Low-Side-Schalter 24a, 24b, 24c sind in Fig. 1 beispielhaft als IGBTs (Bipolartransistoren mit isolierter Gateelektrode), mit jeweils einem Kollektor-, einem Emitter- und einem Gateanschluss und integrierter Freilaufdiode dargestellt. Die Erfindung ist jedoch auch auf Motoransteuerungen in anderen Technologien, etwa mit Leistungs-MOS-FETs anwendbar.

Die Kollektoranschlüsse der High-Side-Schalter 22a, 22b, 22c sind mit dem High-Side-Potential +DC des Zwischenkreises verbunden. Der Emitter des Low-Side-Schalters 24a ist über einen Shuntwiderstand 26a, der Emitter des Low-Side-Schalters 24b über einen Shuntwiderstand 26b und der Emitter des Low-Side-Schalters 24c über einen Shuntwiderstand 26c mit dem Massepotential GND des Zwischenkreises verbunden. Jedes der Paare aus High-Side-Schalter 22a und Low-Side-Schalter 24a, High-Side-Schalter 22b und Low-Side-Schalter 24b, High-Side-Schalter 22a und Low-Side-Schalter 24a bildet einen Zweig der Brückenschaltung. Jeder der Stränge U, V, W des BLCD-Motors 12 ist mit einem der Zweige der Brückenschaltung verbunden, und zwar ist der Strang U mit dem Emitteranschluss des High-Side-Schalters 22a und dem Kollektoranschluss des Low-Side-Schalters 24a, der Strang V mit dem Emitteranschluss des High-Side-Schalters 22b und dem Kollektoranschluss des Low-Side-Schalters 24b, und der Strang W mit dem Emitteranschluss des High-Side-Schalters 22c und dem Kollektoranschluss des Low-Side-Schalters 24c, verbunden.

Weiterhin ist ein Treiberbaustein 30 vorgesehen, mit drei High-Side-Treibereingängen 32a, 32b, 32c und drei Low-Side-Treibereingängen 34a, 34b, 34c, sowie drei High-Side-Treiberausgängen 36a, 36b, 36c und drei Low-Side-Treiberausgängen 38a, 38b, 38c. Dabei bilden die Treibereingänge 32a, 32b, 32c, 34a, 34b, 34c des Treiberbausteins 30 in der dargestellten Ausführungsform gleichzeitig Steuereingänge der Inverterstufe. Der High-Side-Treiberausgang 36a des Treiberbausteins 30 ist mit dem Gateanschluß des High-Side-Schalters 22a verbunden. Entsprechend sind die übrigen Treiberausgänge 36b, 36c, 38a, 38b, 38c an den Gates der High-Side-Schalter 22b, 22c und der Low-Side-Schalter 24a, 24b, 24c angeschlossen.

Dem High-Side-Treiberausgang 36a des Treiberbausteins 30 ist der High-Side-Treibereingang 32a in der Weise zugeordnet, daß im Treiberbaustein 30, falls erforderlich, eine Anpassung der Signalpegel und -logik stattfindet. Dazu werden Ansteuersignale am Treibereingang 32a so umgesetzt, daß das Gate des High-Side-Schalters 22a korrekt angesteuert werden kann. Entsprechend sind die übrigen Treibereingänge 32b, 32c, 34a, 34b, 34c den Treiberausgängen 36b, 36c, 38a, 38b, 38c zugeordnet.

Im Treiberbaustein 30 können weitere Eingänge, etwa zur Überwachung der Spannungen und Phasenlage an den Strängen U, V, W des Motors 12, vorgesehen sein, die für die Erfindung aber nicht von Bedeutung sind und daher in dieser Beschreibung nicht näher erläutert werden.

In der Inverterstufe können außerdem weitere Funktionseinheiten untergebracht sein, beispielsweise eine Stromüberwachungsschaltung 40, wie sie in Fig. 1 durch punktierte Linien angedeutet ist, welche aber für das Verständnis der Erfindung nicht von Bedeutung sind.

Die Steuerstufe 16 weist drei High-Side-Steuerausgänge 42a, 42b, 42c und drei Low-Side-Steuerausgänge 44a, 44b, 44c auf, an welchen Steuersignale zur Ansteuerung der Low-Side-Schalter 24a, 24b, 24c und der High-Side-Schalter 22a, 22b, 22c bereitgestellt werden. Dazu kann die Steuerstufe 16 vorteilhaft als Mikroprozessor ausgeführt sein. Die Steuerstufe 16 kann darüber hinaus zusätzliche weitere Aufgaben ausführen, beispielsweise über weitere Daten- und Messeingänge die Überwachung der Strangströme des BLCD-Motors 12 mittels einer Strommesseinrichtung 40, wie sie in der Darstellung der Inverterstufe 14 in Fig. 1 angedeutet ist, oder die Überwachung des Zwischenkreises. Die Steuerstufe 16 wird ebenfalls aus dem Zwischenkreis versorgt, vorzugsweise über einen Spannungswandler 49.

Erfindungsgemäß steuert die Steuerstufe 16 die High-Side-Schalter 22a, 22b, 22c der Inverterstufe 14 über High-Side-Steuerleitungen 46a, 46b, 46c an, welche die High-Side-Steuerausgänge 42a, 42b, 42c der Steuerstufe 16 mit den High-Side-Treibereingängen 32a, 32b, 32c des Treiberbausteins 30 verbinden. In gleicher Weise werden die Low-Side-Schalter 24a, 24b, 24c der Inverterstufe 14 von der Steuerstufe 16 über Low-Side-Steuerleitungen 48a, 48b, 48c angesteuert, welche die Low-Side-Steuerausgänge 44a, 44b, 44c mit den Low-Side-Steuereingängen 34a, 34b, 34c des Treiberbausteins 30 verbinden, angesteuert.

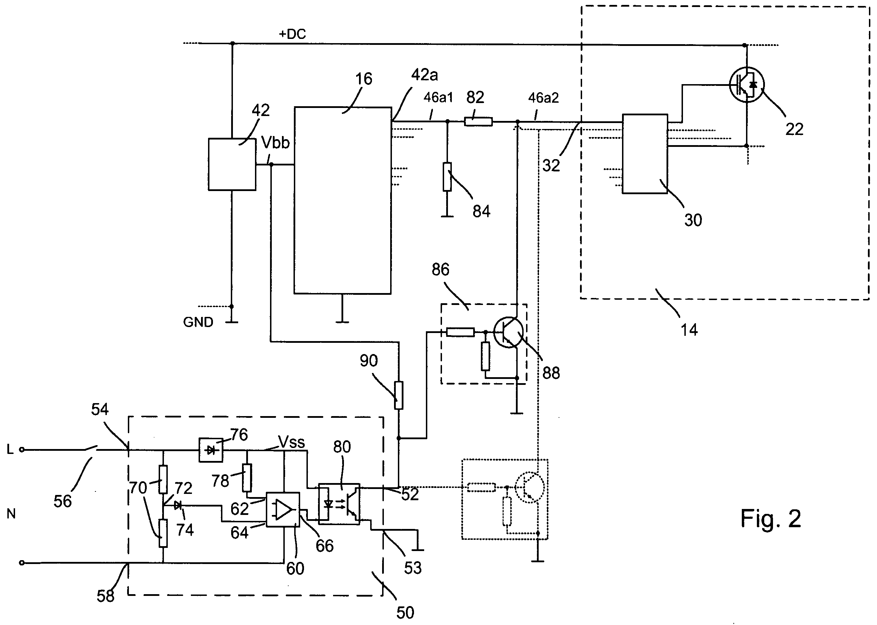

Weiterhin ist eine Schutzschaltung 50 zum Abschalten von Steuerleitungen vorgesehen. Dazu weist die Schutzschaltung 50 einen Abschaltausgang 52 auf, die in Fig. 2 symbolisch mit den High-Side-Steuerleitungen 46a, 46b, 46c verbunden sind. Die Schutzschaltung 50 weist außerdem einen Steuereingang 54 auf, an dem über einen Türkontaktschalter 56 die Klemme N der Netzspannung angeschlossen ist. An einem Nullpotentialeingang 58 der Schutzschaltung 50 ist die Klemme N der Netzspannung angeschlossen. Dabei ist zu beachten, daß mit den Klemmenbezeichnungen L und N die in einer Waschmaschine, vorhandenen Phasen einer Netzwechselspannung bezeichnet sind, welche in der Regel über eine Steckverbindung und/oder einem Hauptschalter mit dem Hausstromanschluss verbunden sind.

Im Folgenden ist nun die Funktion der erfindungsgemäßen Motoransteuerschaltung 10 erläutert. Das Netzteil aus Gleichrichter 18 und Kondensator 20 stellt eine DC-Zwischenkreisspannung zur Verfügung, mit einem positiven High-Side-Potential +DC und einem negativen Low-Side-Potential, welches in der beschriebenen Ausführungsform das Massepotential GND der Motoransteuerschaltung 10 darstellt. Die Zwischenkreisspannung U_{zw} beträgt üblicherweise ca. 300 - 400 Volt Gleichspannung, um ausreichend Leistung, beispielsweise für den Antrieb einer Trommel einer Waschmaschine zur Verfügung zu stellen.

Die Steuerstufe 16 wird ebenfalls aus dem Zwischenkreis versorgt, bevorzugt über einen DC-/DC-Wandler 49, und zwar mit einer Niederbetriebsspannung V_{bb}, von beispielsweise 3,3 Volt für einen in der Steuerstufe ausgebildeten Mikroprozessor, und erforderlichenfalls weiteren Niederbetriebsspannungen.

Die Steuerstufe 16 stellt an ihren High-Side-Steuerausgängen 42a, 42b, 42c und an ihren Low-Side-Steuerausgängen 44a, 44b, 44c Steuersignale zur Verfügung, mit denen jeweils die High-Side-Schalter 22a, 22b, 22c und die Low-Side-Schalter 24a, 24b, 24c durchgeschaltet werden können. In bekannter Weise sind diese Steuersignale so ausgebildet, daß die High-Side-Schalter 22a, 22b, 22c und die Low-Side-Schalter 24a, 24b, 24c abwechselnd phasenversetzt das High-Side- oder das Low-Side Potential durchschalten, sodaß den drei Strängen U, V, W des BLDC-Motos 12 eine Dreiphasenwechselspannung bereitgestellt wird, um den Motor 12 in Betrieb zu setzen.

Die Steuersignale aus der Steuerstufe 16 werden dabei über die High-Side-Steuerleitungen 46a, 46b, 46c und die Low-Side-Steuerleitungen 48a, 48b, 48c an die Steuerstufe 14 übertragen, wobei die High-Side-Steuerleitung 46a für die Ansteuerung des High-Side-Schalters 22a vorgesehen ist. Entsprechend sind jeweils eine der übrigen High-Side-Steuerleitungen 46b, 46c für einen der High-Side-Schalter 22b, 22c und jeweils eine der Low-Side-Steuerleitungen 48a, 48b, 48c für jeweils einen der Low-Side-Schalter 24a, 24b, 24c vorgesehen. Die Steuersignale auf den Low-Side-Steuerleitungen 46a, 46b, 46c und den High-Side-Steuerleitungen 48a, 48b, 48c können je nach Ausbildung der Steuerstufe mit geringen Pegeln im Vergleich zur Zwischenkreisspannung vorliegen. Deshalb werden die Steuersignale mit Hilfe des Treiberbausteins 30 auf für die High-Side-Schalter 22a, 22b, 22c und Low-Side-Schalter 24a, 24b, 24c erforderliche Pegel angepaßt. Außerdem kann es auch erforderlich sein, Logik- und/oder Timinganpassungen vorzunehmen.

Solange die Tür zur Trommel der Waschmaschine geschlossen ist, ist auch der Türkontaktschalter 56 geschlossen. An dem Steuereingang 54 der Schutzschaltung 50 liegt dann gegenüber dem Masseeingang 58 die über den Türkontaktschalter 56 geschaltete Schaltspannung, beispielsweise die in der Waschmaschine vorhandene Netzspannung, in Fig. 1 mit den Klemmenbezeichnungen L und N bezeichnet. Die Schutzschaltung 50 gibt dann über den Abschaltausgang 52 die High-Side-Steuerleitungen 46a, 46b, 46c frei. Die Steuerstufe 16 kann somit die Inverterstufe 14, wie zuvor beschrieben, ansteuern sodaß der BLDC-Motor 12 die Waschtrommel in Drehung versetzen kann.

Sobald die Tür zur Wäschetrommel geöffnet wird, unterbricht der Türkontaktschalter 56 die Schaltspannung zum Steuereingang 54 der Schutzschaltung 50. Die Schutzschaltung 50 schaltet dann über ihren Abschaltausgang 52 die High-Side-Steuerleitungen 46 ab. Die Steuerstufe 16 kann dann die High-Side-Schalter 22a, 22b, 22c nicht mehr ansteuern. Damit ist es nicht mehr möglich, die Stränge, U, V, W des BLDC-Motors 12 mit einer Dreiphasen-Wechselspannung zu versorgen und den Trommelantrieb in Betrieb zu versetzen.

Bei geöffnetem Türkontaktschalter 56 ist somit durch die Schutzschaltung 50 wirksam verhindert, daß die Wäschetrommel in Bewegung gesetzt wird.

Da von der Schutzschaltung 50 aber nur die High-Side-Steuerleitungen 46a, 46b, 46c abgeschaltet werden, kann die Schaltstufe 16 immer noch über die Low-Side-Steuerleitungen 48a, 48b, 48c die Low-Side-Schalter 24a, 24b, 24c durchschalten. Damit ist es möglich, die Stränge U, V, W des BLDC-Motors 12 nach Masse GND kurzzuschließen, um den Motor 12 durch Kurzschlussbremsen zum Stillstand zu bringen. Dies kann beispielsweise dann erforderlich sein, wenn es in Folge einer Fehlfunktion gelingen sollte, die Tür zur Trommel während eines Waschprogrammes, insbesondere während des Schleuderns, zu öffnen.

Im Folgenden soll nun eine vorteilhafte Weiterbildung der Erfindung detaillierter erläutert werden. Dazu ist in Fig. 2 eine beispielhafte Ausgestaltung für eine Schutzschaltung 50 und eine Beschaltung der High-Side-Steuerleitungen 46a, 46b, 46c ausschnittsweise detaillierter dargestellt. Die übrige Schaltung, insbesondere der Inverterstufe 14 ist nicht näher dargestellt, soweit sie bereits aus Fig. 1 bekannt ist.

Die Schutzschaltung 50 enthält einen Komparator 60, mit einem Referenzeingang 62, einem Vergleichseingang 64 und einem Ausgang 66. Zwischen dem Steuereingang 54 und dem Nullpotentialeingang 58 ist ein Spannungsteiler 70 mit einem Abgriff 72 geschaltet. Der Abgriff 72 ist über einen Gleichrichter 74 mit dem Vergleichseingang 64 des Komparators 60 verbunden. Eine mit dem Steuereingang 54 verbundene Gleichrichterschaltung 76 stellt eine stabilisierte Betriebsspannung Vₛₛ für den Komparator 60 bereit, wenn der Steuereingang 54 mit einer Netzspannung beaufschlagt ist. Der Referenzeingang 62 des Komparators 60 ist über einen Widerstand 78 mit der Betriebsspannung Vₛₛ verbunden. Die Schutzschaltung 50 weist außerdem einen Optokoppler 80 auf, mit einem Anodeneingang und einem Kathodeneingang, sowie einem Kollektorausgang und einem Emitterausgang. Der Anodeneingang ist mit der Betriebsspannung Vₛₛ verbunden, der Kathodeneingang mit dem Ausgang 66 des Komparators 60. Der Kollektorausgang des Optokopplers 80 bildet den Abschaltausgang 52, der Emitterausgang den Masseausgang 53 der Schutzschaltung 50.

Die im Folgenden beschriebene Schaltung der High-Side-Steuerleitung 46a ist exemplarisch nur für eine der High-Side-Steuerleitungen 46a, 46b, 46c ausführlich beschrieben und in Fig. 2 dargestellt. Die Beschaltung der beiden anderen High-Side-Steuerleitungen 46b, 46c ist jedoch identisch ausgeführt, wie in Fig. 2 durch punktierte Linien angedeutet ist.

Gemäß dieser Beschaltung ist in die High-Side-Steuerleitung 46a zwischen der Steuerstufe 16 und der Inverterstufe 14 ein Entkopplungswiderstand 82a eingefügt, wodurch die Steuerleitung 46a in zwei Teile geteilt ist. Der erste Teil 46a1 verbindet den Steuerausgang 42a der Steuerstufe 16 mit dem Entkopplungswiderstand 82a. Der zweite Teil 46a2 verbindet den Entkopplungswiderstand 82a mit dem Eingang 32a der Inverterstufe 14. Der erste Teil 46a1 ist außerdem über einen Pull-Down-Widerstand 84a gegen Masse GND verbunden. Die Beschaltung umfaßt weiterhin einen Pull-Down-Treiber 86a, mit einem Schalttransistor 88a, dessen Basis über einen Widerstand mit dem Schaltausgang 52 der Schutzschaltung 50 verbunden ist. Der Emitter des Schalttransistors 88a ist mit der Masse GND der Motoransteuerschaltung 10 verbunden und der Kollektor des Schalttransistors 88a ist mit dem zweiten Teil 46a2 der Steuerleitung 46a verbunden. Der Schaltausgang 52 der Schutzschaltung 50 ist außerdem über einen Pull-Up-Widerstand 90 mit der Betriebsspannung V_{bb} der Schaltstufe 16 verbunden.

Im Folgenden ist nun die Funktion der in Figur 2 dargestellten Ausgestaltung der Schutzschaltung 50 beschrieben. Wenn der Türkontaktschalter 56 geschlossen ist, liegt zwischen dem Steuereingang 54 und dem Nullspannungseingang 58 der Schutzschaltung 50 eine Netzwechselspannung, beispielsweise von 230 Volt AC, an. Die Gleichrichterschaltung 76 liefert dann eine stabilisierte Betriebsspannung Vₛₛ für den Komparator 60. Die stabilisierte Betriebsspannung Vₛₛ liegt auch über den Widerstand 78 am Referenzeingang 62 des Komparators 60. Die am Abgriff 72 zur Verfügung stehende Teilspannung der Netzwechselspannung ist über den Gleichrichter 74 dem Vergleichseingang 64 des Komparators 60 zugeführt. Der Spannungsteiler 70 ist so dimensioniert, daß der Komparator 60 feststellen kann, ob der Steuereingang 54 tatsächlich mit dem L-Potential der Netzwechselspannung verbunden ist, also der Türkontaktschalter 56 richtig geschlossen ist, oder ob am offenen Schalter 56 möglicherweise eine Kriechspannung anliegt, beispielsweise wenn parallel zu dem Steuereingang 54 ein weiterer Steuereingang einer anderen Überwachungseinheit mit dem Türkontaktschalter 56 verbunden ist. Dazu ist der Spannungsteiler 70 vorzugsweise so dimensioniert, daß eine durch einen Kriechstrom verursachte Teilspannung am Abgriff 72 noch nicht ausreicht, den Komparator 60 durchzuschalten.

Wenn der Komparator 60 feststellt, daß die Eingangsspannung zwischen Steuereingang 54 und Durchgangsspannungseingang 58 die geforderte Größe hat, also der Türkontaktschalter 56 sicher geschlossen ist, schaltet er über seinen Ausgang 66 die Diode des Optokopplers 80 ein. Der Optokoppler 80 schaltet dann den Abschaltausgang 52 gegen den mit der Masse GND der Motoransteuerschaltung 10 verbundenen Masseeingang 53 durch. Damit wird die Basis des Schalttransistors 88a des Pull-Down-Treibers 86a gegen Masse gezogen, so daß der Schalttransistor 88a sperrt. Der zweite Teil der Steuerleitung 46a2 ist damit freigegeben, so daß die Steuerstufe 16 die High-Side-Steuerleitung 46a hochziehen kann, um damit den High-Side-Schalter 22a durchzuschalten.

Ist der Türkontaktschalter 56 dagegen geöffnet, dann ist der Komparator 60 entweder ganz abgeschaltet, weil die Betriebsspannung Vₛₛ fehlt, oder, falls die Betriebsspannung aus Vₛₛ in Folge eines Kriechstroms doch zur Verfügung steht, stellt der Komparator 60 fest, daß die Eingangsspannung zwischen dem Steuereingang 54 und dem Nullspannungseingang 58 nicht ausreicht und schaltet die Diode des Optokopplers 80 nicht ein. Damit ist der Ausgang des Optokopplers 80 offen, der Abschaltausgang 52 kann frei schwimmen und wird durch den Pull-Up-Widerstand 90 auf das Potential der Niedervoltbetriebsspannung V_{bb} gezogen. Da die Basis des Schalttransistors 88a mit dem jetzt hochgezogenen Potential des Schaltausgangs 52 der Schutzschaltung 50 verbunden ist, schaltet der Schalttransistor 88a den zweiten Teil der 46a2 der Steuerleitung gegen Masse GND. Die Steuerstufe 16 kann nun zwar mit dem High-Side-Steuerausgang 42a den ersten Teil der High-Side-Steuerleitung 46a1 hochziehen, da der erste Teil 46a1 der Steuerleitung jedoch über den Entkopplungswiderstand 82 vom zweiten Teil der High-Side-Steuerleitung 46a2 entkoppelt ist, belibt dieser auf dem Potential der Masse GND , so daß der High-Side-Schalter 22a nicht eingeschaltet werden kann.

In gleicher Weise sind die beiden übrigen High-Side-Steuerleitungen 46b und 46c beschaltet, wie in Fig. 2 durch punktierte Linien angedeutet.

Es ist also gezeigt, daß die Schutzschaltung 50 wirksam das Einschalten der High-Side-Schalter 22a, 22b, 22c verhindern kann, wenn der Türkontaktschalter 56 geöffnet ist.

Selbstverständlich ist die gezeigte Detailschaltung nur exemplarisch für dem Fachmann geläufige alternative Beschaltungen. So können, abhängig von der Schaltungslogik, die in der Steuerstufe 16 und in der Inverterstufe 14 Verwendung findet, die High-Side-Steuerleitungen 46a, 46b, 46c auf andere Weise abzuschalten sein, beispielsweise durch Pull-Up-Treiber statt durch Pull-Down-Treiber. Entsprechend können die Steuerausgänge 42a, 42b, 42c mit Pull-Up-Widerständen, gegen das Potential der Betriebsspannung V_{BB} gezogen sein.

Die Erfindung ist zudem nicht auf die beispielhaft dargestellten Ausführungsformen beschränkt, sondern umfasst sämtliche technisch sinnvollen Kombinationen der erläuterten und in den Ansprüchen offenbarten Merkmale.

Beispielsweise kann vorgesehen sein, daß die Steuerstufe mit der Inverterstufe nur über eine Steuerleitung verbunden ist, über welche ein Ansteuersignal für die High-Side- und Low-Side-Schalter übertragen wird. Dabei können einzelne Schaltsignale für die einzelnen High-Side- und Low-Side-Schalter in der Inverterstufe aus den Ansteuersignalen gewonnen werden, etwa durch Phasenverschiebung und Invertierung.

Es kann auch vorgesehen sein, daß die Steuerstufe mit der Inverterstufe über eine High-Side-Steuerleitung und eine Low-Side-Steuerleitung verbunden ist, über welche jeweils ein Ansteuersignal für die High-Side- und ein Ansteuersignal für die Low-Side-Schalter übertragen wird, und entsprechend in der Inverterstufe einzelne Schaltsignale für die einzelnen High-Side-Schalter und die Low-Side-Schalter aus den Ansteuersignalen gewonnen werden.

## Patentansprüche

1. Motoransteuerschaltung (10) für einen bürstenlosen Waschmaschinenmotor (12), mit
- einer Inverterstufe (14) zur Leistungsansteuerung des bürstenlosen Motors,
- und mit einer Steuerstufe (16) zur Erzeugung von Steuersignalen für die Inverterstufe (14),
wobei die Inverterstufe von der Steuerstufe über Steuerleitungen (46a, 46b, 46c, 48a, 48b, 48c) angesteuert wird
**dadurch gekennzeichnet, daß** eine Schutzschaltung (50) zum Abschalten der Steuerleitungen vorgesehen ist.

2. Motoransteuerschaltung nach Anspruch 1, bei der die Inverterstufe (14) eine Brückenschaltung umfaßt, welche High-Side-Schalter (22a, 22b, 22c) und Low-Side-Schalter (24a, 24b, 24c) aufweist.

3. Motoransteuerschaltung nach Anspruch 2, bei der für High-Side Schalter (22a, 22b, 22c) und Low-Side-Schalter (24a, 24b, 24c) jeweils separate Steuerleitungen vorgesehen sind.

4. Motoransteuerschaltung nach Anspruch 3, bei der die Schutzschaltung (50) die Steuerleitungen für die High-Side-Schalter (22a, 22b, 22c) abschaltet.

5. Motoransteuerschaltung nach einem der Ansprüche 2 bis 4, bei der die Brückenschaltung dreiphasig ausgelegt ist.

6. Motoransteuerschaltung nach einem der vorhergehenden Ansprüche, bei der die Schutzschaltung (50) einen Steuereingang (54) für ein Türkontaktsignal aufweist.

7. Motoransteuerschaltung nach einem der vorhergehenden Ansprüche, bei der die Schutzschaltung (50) wenigstens einen Steuerausgang (52) mit Optokoppler (80), zur Abschaltung der Steuerleitungen (22a, 22b, 22c), aufweist.

8. Waschmaschine mit einer Motoransteuerung nach einem der Ansprüche 1 bis 7.

9. Waschmaschine nach Anspruch 8, wobei die Waschmaschine einen Türkontaktschalter (56) aufweist, der mit dem Steuereingang (54) der Schutzschaltung (50) verbunden ist.

## Claims

1. Motor control circuit (10) for a brushless washing-machine motor (12) having
- an inverter stage (14) for controlling the power of the brushless motor,
- and a control stage (16) for generating control signals for the inverter stage (14), wherein the inverter stage is controlled by the control stage by way of control lines (46a, 46b, 46c, 48a, 48b, 48c),
**characterised in that** a protective circuit (50) is provided for switching off the control lines.

2. Motor control circuit according to claim 1, wherein the inverter stage (14) comprises a bridge circuit having high-side switches (22a, 22b, 22c) and low-side switches (24a, 24b, 24c).

3. Motor control circuit according to claim 2, wherein separate control lines are provided respectively for high-side switches (22a, 22b, 22c) and low-side switches (24a, 24b, 24c).

4. Motor control circuit according to claim 3, wherein the protective circuit (50) switches off the control lines for the high-side switches (22a, 22b, 22c).

5. Motor control circuit according to one of claims 2 to 4, wherein the bridge circuit is designed with three phases.

6. Motor control circuit according to one of the preceding claims, wherein the protective circuit (50) has a control input (54) for a door contact signal.

7. Motor control circuit according to one of the preceding claims, wherein the protective circuit (50) has at least one control output (52) with optocoupler (80), for switching-off of the control lines (22a, 22b, 22c).

8. Washing machine having a motor control according to one of claims 1 to 7.

9. Washing machine according to claim 8, wherein the washing machine has a door contact switch (56) that is connected to the control input (54) of the protective circuit (50).

## Revendications

1. Circuit de commande de moteur (10) pour un moteur de machine à laver sans balais (12), avec
- un étage d'inversion (14) destiné à commander la puissance du moteur sans balais,
- et avec un étage de commande (16) destiné à produire des signaux de commande pour l'étage d'inversion (14),
où l'étage d'inversion est commandé par l'étage de commande par l'intermédiaire de lignes conductrices de commande (46a, 46b, 46c, 48a, 48b, 48c)
**caractérisé en ce qu'**un disjoncteur (50) est prévu pour déconnecter les lignes conductrices de commande.

2. Circuit de commande de moteur selon la revendication 1, dans lequel l'étage d'inversion (14) comprend un circuit en pont, qui présente des commutateurs côté haute tension (22a, 22b, 22c) et des commutateurs côté basse tension (24a, 24b, 24c).

3. Circuit de commande de moteur selon la revendication 2, dans lequel des lignes conductrices de commande séparées sont respectivement prévues pour les commutateurs côté haute tension (22a, 22b, 22c) et les commutateurs côté basse tension (24a, 24b, 24c).

4. Circuit de commande de moteur selon la revendication 3, dans lequel le disjoncteur (50) déconnecte les lignes conductrices de commande pour les commutateurs côté haute tension (22a, 22b, 22c).

5. Circuit de commande de moteur selon l'une quelconque des revendications 2 à 4, dans lequel le circuit en pont est réalisé de manière triphasée.

6. Circuit de commande de moteur selon l'une quelconque des revendications précédentes, dans lequel le disjoncteur (50) présente une entrée de commande (54) pour un signal de contact de porte.

7. Circuit de commande de moteur selon l'une quelconque des revendications précédentes, dans lequel le disjoncteur (50) présente au moins une sortie de commande (52) avec un coupleur optique (80) en vue d'une déconnexion des lignes conductrices de commande (22a, 22b, 22c).

8. Machine à laver avec une commande de moteur selon l'une quelconque des revendications 1 à 7.

9. Machine à laver selon la revendication 8, dans laquelle la machine à laver présente un commutateur de contact de porte (56), qui est relié à l'entrée de commande (54) du disjoncteur (50).
